# EUROPEAN PATENT APPLICATION

(11) **EP 1 405 661 A2**
(43) Date of publication of application: **07.04.2004**
(21) Application number: 03021934.9
(22) Date of filing: 29.09.2003
(51) Int. Cl.: B01D 46/24

(54) **Filter system and method for filter cleaning a gas laden with powder particles**

(30) Priority: 01.10.2002 DE 10246126
(71) Applicant: NORDSON CORPORATION, Westlake, Ohio 44145-1119 (US)
(72) Inventor: Hering, Uwe, 21337 Lüneburg (DE)
(74) Representative: Eisenführ, Speiser & Partner

(57) **Abstract**

The invention relates to a filter system and a method for cleaning a gas laden with powder particles, in particular for a powder coating apparatus, comprising at least one filter element arranged between a crude gas chamber and a clean gas chamber, and a first gas conveying means (22) for generating a gas stream from the crude gas chamber through the filter element (26,28) into the clean gas chamber. The invention relates also to a shut-off device (64,66) for interrupting the gas stream through the filter element (26,28), and a second gas conveying means (92) for generating a gas stream through the filter element (26,28) into the crude gas chamber (20), and by a vibration means (42,44) for vibrating and/or shaking the filter element (26,28).

## Description

The present invention relates to a filter system for cleaning a gas laden with powder particles, in particular for a powder coating apparatus, comprising at least one filter element arranged between a crude gas chamber and a clean gas chamber, and a first gas conveying means for generating a gas stream from the crude gas chamber through the filter element into the clean gas chamber. The invention relates also to a powder coating apparatus.

The invention relates still further to a method for filter cleaning a gas laden with powder particles, by which the gas laden with powder particles is conveyed by a gas conveying means from a crude gas chamber through at least one filter element into a clean gas chamber.

A filter system and filter method of this kind are known, for example from DE 38 13 259 C2. In order to coat objects with powder, the objects to be coated are conveyed into coating chambers in which powder particles are present that deposit themselves onto the objects to be coated. The coated objects are subsequently conveyed out of the coating chamber. Some of the powder particles present in the coating chamber are not deposited onto the object and remain in the coating chamber, where they usually accumulate on the floor of the coating chamber. These surplus amounts of powder are recovered and then fed again into the coating chamber. To this end, underpressure is generated in the coating booth with the help of a blower or the like, thus generating a gas stream that conveys surplus powder particles out of the coating chamber back into a crude gas chamber. The filter system referred to at the outset comprises said crude gas chamber, at least one filter element and the first gas conveying means for generating a gas stream from the crude gas chamber through the filter element into the clean gas chamber, and hence also to the generation of the underpressure in the coating chamber.

Powder particles accumulate in the filter elements during filtering, particularly on the surfaces thereof. The amount of powder particles retained in the filter element increases over time, with the result that the flow resistances also increase over time, and hence that filtering is impaired as a consequence. In order to counteract these adverse effects, the filter elements must be cleaned from time to time. To this end, a gas stream is generated in the powder recovery system known from DE 38 13 259 by means of a blow-out nozzle, said gas stream being directed into the interior of the filter element to detach powder particles adhering to the filter elements and to blow them downwards to the floor of the crude gas chamber. The results obtained with the known powder recovery system are usable, but the cleaning times are so long that coating operations are interrupted for a relatively long time. The blow-out nozzles generate gas streams in the direction of the filter element to only a partial extent, so the filter is only partially cleaned.

The object of the present invention is to provide a filter system, a coating apparatus and a method for cleaning a gas laden with powder particles, in particular for powder coating apparatus, with the help of which invention and method filters can be rapidly cleaned.

The invention achieves said object with a filter system of the kind initially specified by means of a shut-off device for interrupting the gas stream through the filter element, a second gas conveying means for generating a gas stream through the filter element into the clean gas chamber, and by means of a vibration means for vibrating and/or shaking the filter element.

The invention further achieves said object with a powder coating apparatus having a filter system according to the invention.

The invention further achieves said object with a method of the kind initially specified, in that, to clean the filter element, a gas stream through the filter element in the direction of the clean gas chamber is generated by a second gas conveying means, and that the filter element is vibrated and/or shaken by a vibration means such that powder particles present in the filter element are detached from the filter element.

With the filter system according to the invention and the method according to the invention, the filter element or plurality of filter elements can be cleaned very efficiently and quickly. The gas stream through the filter element in the direction of the clean gas chamber is firstly and totally interrupted by the shut-off device, then a cleaning gas stream through the filter element in the direction of the crude gas chamber is generated, and the filter element is simultaneously caused to vibrate and/or oscillate by means of a vibration means for vibrating and/or shaking, so that the filter elements are extensively freed of powder particles not only by the cleaning gas stream, but additionally by the mechanical vibrating, knocking or oscillating movement. The times needed to clean the filter elements are significantly reduced by the apparatus and method according to the invention.

According to another aspect of the invention, the object is achieved with a filter system of the kind initially specified, wherein a second gas conveying means is provided for generating a gas stream through the filter element, the second gas conveying means having at least one movable nozzle element for supplying at least one gas stream directed at the filter element.

According to this aspect of the invention, the object is further achieved, when applying a method of the kind initially specified, by generating a gas stream through the filter element in the direction of the clean gas chamber by means of a second gas conveying means, wherein the gas stream is supplied in the direction of the filter element (26, 28) by a movable nozzle element.

The advantages of this aspect of the invention consist substantially in a gas stream for cleaning the filter system being channeled into same due to a movable nozzle element for supplying a gas stream at several places - over a large area, so to speak -, such that the filter element is cleaned uniformly and very completely. Compared to immovable, stationary blow-out nozzles, this leads to the filter being cleaned significantly more efficiently and in considerably shortened cleaning times. According to this aspect of the invention, a vibration means for vibrating and/or shaking a filter element, pursuant to a previously described aspect, is deployed in order to reduce still further the time required to clean the filter system. However, it is not imperative to use such a vibration means. It has been established in tests that fast and complete cleaning of the filter system is also possible with only one movable nozzle element.

One preferred embodiment of the filter cleaning system according to the invention is characterized in that two filter elements are arranged in parallel between the crude gas chamber and the clean gas chamber, and each filter element is assigned a shut-off device for interrupting the gas stream, as well as a vibration means. By virtue of this parallel arrangement of two filter elements according to the invention, the filter system can be operated continuously, with only one of the two filters being cleaned temporarily while the other filter remains in operation to filter the gas. Due to the fact, according to the invention, that a cleaning gas stream is generated and the filter element is vibrated, the cleaning times can be kept short, with the result that both or several filter elements are available most of the time.

In one development of the invention it is proposed that the filter element is disposed inside a frame and that the vibration means are associated with said frame such that the frame and the filter element disposed inside said frame are caused to vibrate. This simple construction enables efficient vibration and efficient knocking of the filter element to be achieved.

The vibration means appropriately comprises a pneumatic cylinder that can be intermittently charged with pressure gas, the piston movable within said cylinder being connected by a piston rod to the frame. The vibration can be applied particularly well by a plate being attached to a free end of the piston rod, wherein said plate can be brought into contact with the frame. By this means, owing to the mass of the plate, it is also possible to achieve an optimal setting of the vibration system comprising the filter element, the frame and the piston rod.

In an alternative embodiment, the frame for receiving the filter element is disposed at a distance plate positioned between the crude gas chamber and the clean gas chamber, and the vibration means is mounted on said distance plate. With the help of such a distance plate, the separate parts can be easily assembled and disassembled, and the filter elements can be easily replaced.

An appropriate development of the apparatus is characterized in that a cover plate covering the frame is separably attachable to the frame, that an outlet opening is formed in the cover plate for discharging cleaned gas into the clean gas chamber, and that the shut-off device comprises a movable shut-off member for closing the outlet opening. Efficient feeding of a cleaning gas stream is thus achieved with a simple constructional design. The shut-off device preferably comprises a pneumatic cylinder that can be charged with pressure gas, wherein the shut-off member of the shut-off device is connected by means of a piston rod to a piston (50, 52) that is movable inside the pneumatic cylinder.

One preferred embodiment of the filter system with movable nozzle element is one in which said element is rotatingly mounted on bearings and is capable of being driven. Such a rotable mounting is particularly easy and inexpensive to design and construct. This embodiment is developed by the nozzle element having at least one elongated arm with a gas channel defined therein and a plurality of gas outlet channels directed at the filter element. Such an elongated arm with a plurality of gas outlet channels ensures that the gas feed is simple and that a large area of the filter element receives the gas feed.

A particularly preferred development of this embodiment is one in which the gas outlet channels are so arranged that the movable arm can be rotatably driven by the outflowing gas. By means of a single gas feed into the movable arm, one or several gas streams into the filter element are generated, and simultaneously the drive for the preferably rotating movement of the movable nozzle element is realized. It is particularly preferred that the longitudinal axes of the gas outlet channels are positioned spaced apart on the arm and slanted with respect to a rotational axis, preferably at an angle of 15°-30°, and particularly preferably at an angle of about 22°.

In an alternative embodiment, it is proposed that the second gas conveying means has several flow channels for feeding pressure gas into the filter elements, and that the inlet openings can be connected to a pressure gas source by means of a pressure gas distributor mounted on the cover plate. This means that the cleaning gas is fed in at several locations, thus achieving efficient cleaning of the filter.

According to one preferred embodiment, the method according to the invention is developed such that two filter elements are arranged in parallel between the crude gas chamber and the clean gas chamber, and that, in order to clean one of the filter elements, the gas stream into the clean gas chamber is firstly interrupted by means of a shut-off device assigned to the filter element, while a gas stream continues to flow through the respective other filter element in order to clean the gas, that a cleaning gas stream through the filter element in the direction of the clean gas chamber is generated in the first filter element by a second gas conveying means, and that, while the cleaning gas stream is flowing through the filter element, the first filter element is vibrated and/or shaken by a vibration means such that powder particles present in the filter element are detached from the filter element. In this way, operation can be maintained at all times.

Other advantageous developments of the method according to the invention are described in the subclaims. With regard to the advantages of the invention, reference is made to the descriptions of the filter system according to the invention in the foregoing and to the description that follows.

The invention will now be described on the basis of embodiments and with reference to the drawings. The drawings show:
- Figure 1: a powder coating apparatus with coating chamber and integrated filter system, in a perspective view,
- Figure 2: a schematic view into a filter system integrated in a powder coating apparatus,
- Figure 3: a portion of the system according to the invention as shown in Figure 1, in a perspective view,
- Figure 4: the portion from Figure 3 in a perspective view from the rear,
- Figure 5: a cover plate with components of the filter system, in a perspective view, and
- Figure 6: a side elevation view of that part of the system shown in Figure 5, and
- Figure 7: a plan view of that part of the system shown in Figure 5.
- Figure 8: a perspective plan view of a portion of an alternative embodiment of a filter system with a movable nozzle element;
- Figure 9: a side elevation view of the filter system pursuant to Figure 8;
- Figure 10: a further side elevation view of the filter system pursuant to Figure 8;
- Figure 11: a plan view of the filter system pursuant to Figure 8;
- Figure 12: a view from below of the filter system pursuant to Figure 8;
- Figure 13: a perspective view of a movable nozzle element;
- Figure 14: the nozzle element in Figure 13 in a plan view;
- Figure 15: a side elevation view of the nozzle element in Figure 13;
- Figure 16: the nozzle element pursuant to Figure 13 in a further side elevation view.

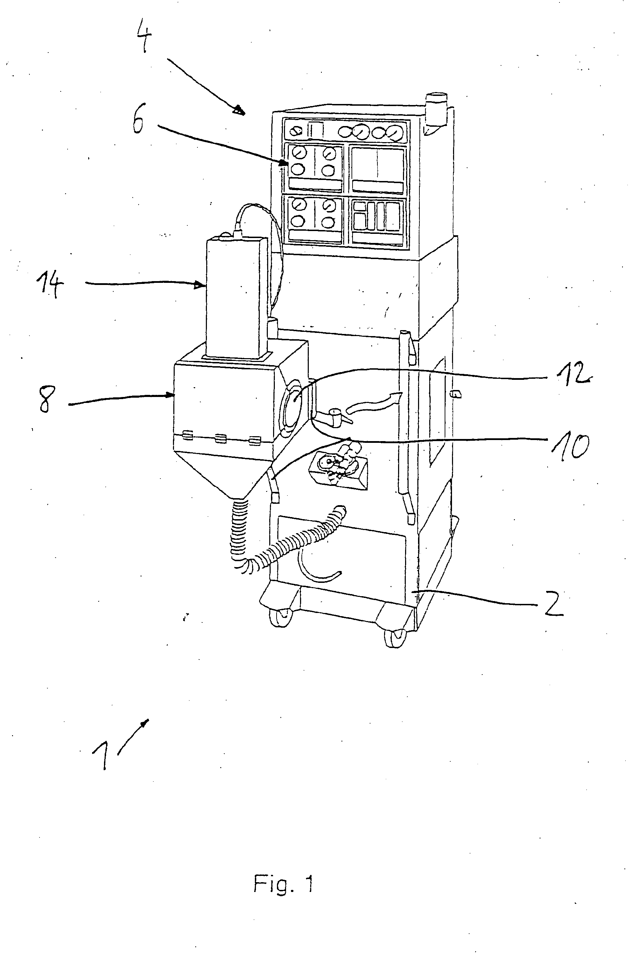

The preferred embodiment of a powder coating apparatus 1 shown in a perspective view in Figure 1 comprises a rack frame 2 having a total of four rollers for easy movement of the entire powder coating apparatus 1. A control and regulation device 4 with a display and operating panel is disposed in the upper part on the rack frame 2 and serves to control and regulate the separate components of the powder coating apparatus 1. A coating booth 8 is supported laterally at a distance from the rack frame 2 by means of a support means 10. In this embodiment, the coating chamber 8 serves to coat a cable with powder, for example talcum or superabsorbent powder. The cable to be coated can be fed through a feed opening 12 into the coating chamber 8 and conveyed out of the coating chamber 8 through an opposite outlet opening, not shown. By means of a device for supplying and feeding powder, in the form of a powder spray gun 14, powder is sprayed into the coating chamber 8 in the direction of the object to be coated. The spray gun can be, for example, a Tribomatic or other type of spray gun.

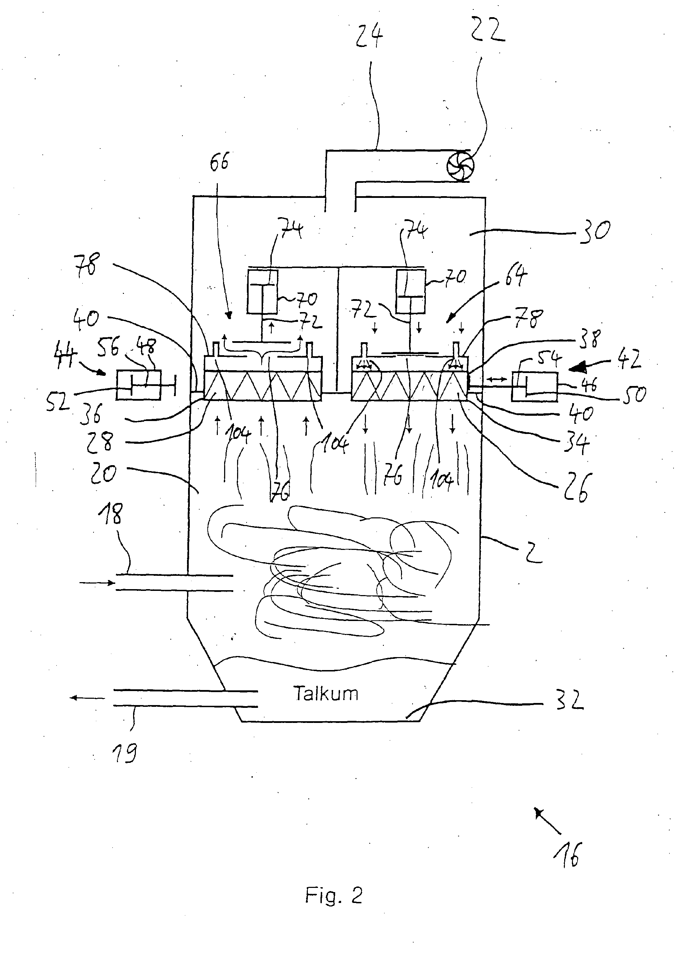

A filter system 16 for cleaning a gas laden with powder particles or for recovering powder particles from a gas stream is shown schematically in Figure 2. The filter system 16 is disposed inside a rack frame 2 (cf. Figure 1) and mainly serves in the embodiment shown to recover powder that has not been deposited onto the object to be coated inside coating booth 8. By means of a suction line 18 connected to the coating chamber 8 (Figure 1), on the one hand, and to a crude gas chamber 20, on the other hand, underpressure is generated inside the coating chamber 8 and surplus powder is conveyed with the gas stream out of the coating chamber 8 into the crude gas chamber 20. The underpressure in the crude gas chamber 20 is generated by a blower 22 in the form, for example, of a side-channel compressor, said blower being directed into a pipe 24 and mounted inside the upper portion of the rack frame 2. The filter system 16 according to the invention essentially comprises two filter elements 26, 28 arranged in parallel (Figure 2) between the crude gas chamber 20 and a clean gas chamber 30, and a first gas conveying means 22 in the form of a blower 23 for generating a gas stream from the crude gas chamber 20 into the clean gas chamber 30. In operation, powder particles are retained and recovered by the filter elements 26, 28. Said particles mostly fall back onto the floor 32 of the crude gas chamber 20 and can be re-used for powder coating by conveying them through line 19 to the coating chamber. Underpressure is generated by the gas conveying means 22 in the crude gas chamber 20 and, by means of line 18, in the coating chamber 8 as well.

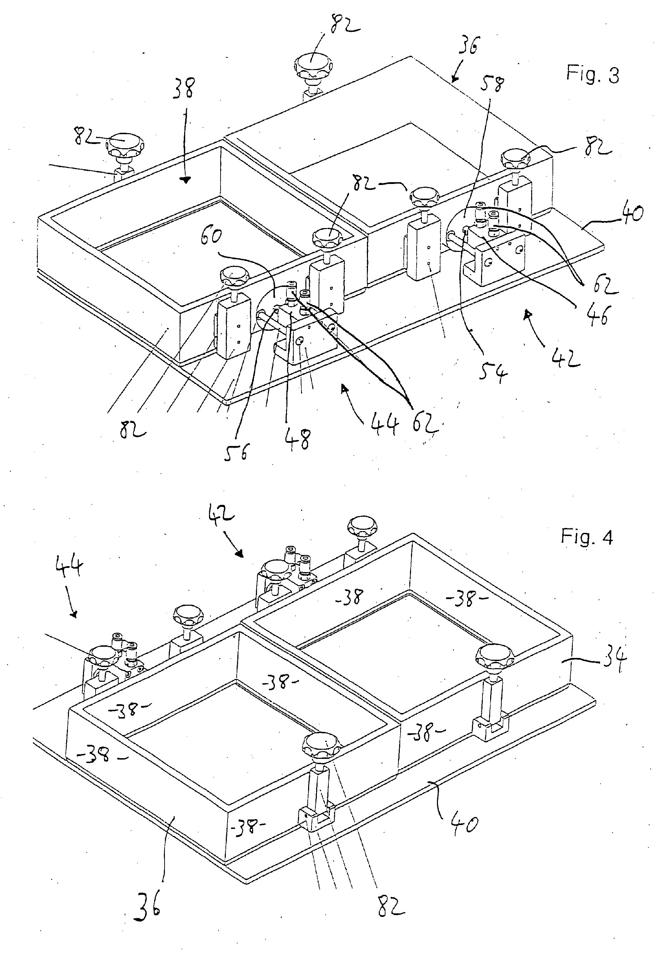

As can be seen not only from the schematic view in Figure 2, but also from the view of a preferred embodiment in Figures 3 and 4, the two filter elements 26, 28 are each housed inside a substantially parallelepipedal frame 34, 36. Frames 34, 36 are made of wooden boards 38 and mounted onto a distance plate 40 that is positioned between the crude gas chamber 20 and the clean gas chamber 30 and attached to the rack frame 2.

Each frame 34, 36 and hence each filter element 26, 28 is assigned a vibration means 42, 44 for vibrating and/or shaking or knocking the filter elements 26, 28. Each vibration means 42, 44 is mounted on the distance plate 40 and comprises a pneumatic cylinder 46, 48 that can be intermittently charged with pressure gas, and pistons 50, 52 movable back and forth within said cylinder (Figure 2). Each piston 52 is connected to a piston rod 54, 56, at the free end of which a plate 58, 60 is attached that can be brought into contact with frame 34 and 36, respectively. When piston 50, 52 moves intermittently back and forth, plate 58, 60 and piston rods 54, 56 knock against the frame 34, 36 and cause the latter and filter element 26, 28 disposed inside the frame 34, 36 to vibrate or oscillate, with the result that filtered particles adhering to the surface of filter elements 26, 28 fall down into the crude gas chamber 20. In order to generate the back-and-forth movement of the pistons 50, 52, pressure gas connections 62 shown in Figures 3 and 4 are connected to the cylinders 46, 48 such that pressure gas for generating the vibration can be fed from a pressure gas source (not shown) into the cylinder; control device 4 is used for this purpose.

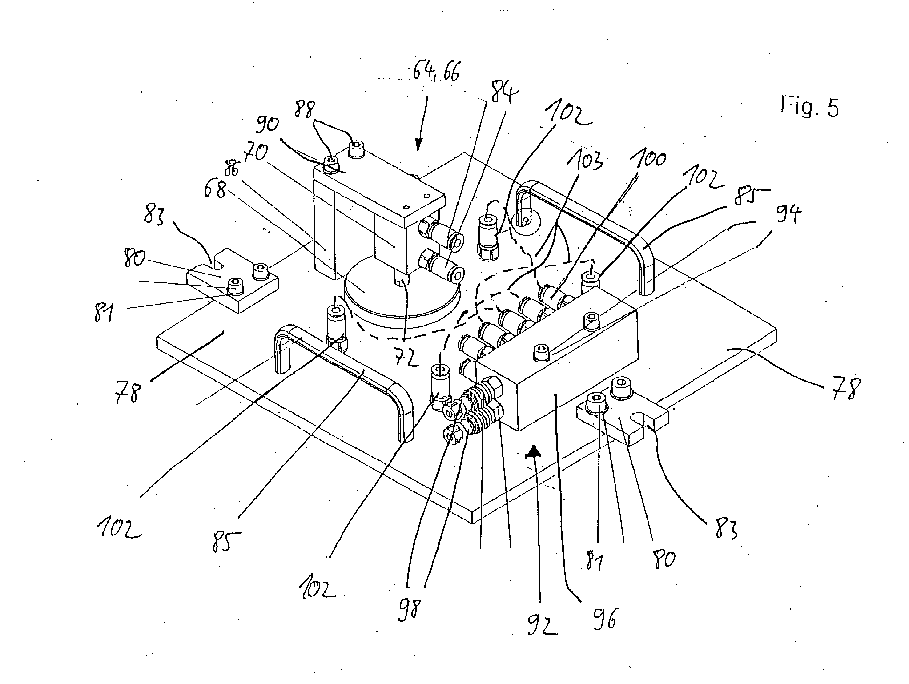

As shown by Figures 2 and 5, each filter element 26, 28 is assigned a shut-off device 64, 66 for interrupting the gas stream through the respective filter elements 26 and 28. In Figure 2, the shut-off device 66 in the left-hand portion is shown in the open position and the shut-off device 64 in the right-hand portion is shown in the closed position. The shut-off devices 64, 66 will now be explained in greater detail with reference to Figure 5. Each shut-off device 64, 66 comprises a movable shut-off member 68 in the form of a circular plate, a pneumatic cylinder 70 that can be charged with pressure gas, each of said cylinders having a piston rod 72 connected to a piston 74 that is movable inside the pneumatic cylinder 70 (Figure 2). Each shut-off member 68 is so designed that, when in the closed position, it closes a respective outlet opening 76 formed in a cover plate 78.

Each cover plate 78 (cf. Figure 5) covers the top side of the frame 36, 38 housing the filter elements 26, 28 (Figure 3). A cover plate 78 as shown in Figure 5, including the components mounted thereon, can be placed upon and fastened to each of frames 36, 38 (cf. Figure 3) for this purpose. Fastening is done with fixing plates 80 that have slots 83, said plates being screwed onto the cover plate 78 with fixing screws 81 (Figure 5), and with a plurality of thumb screws 82 attached to frames 36, 38, the shanks of said thumb screws being insertable into slots 83 of the fixing plates 80 to fasten the cover plate 78 onto frames 36, 38. In a manner not shown in the Figure, thumb screws 82 are pivotably hinged to frames 36, 38 in such a way that the thumb screws 82 can be removed entirely from slots 83 in fixing plates 82. The cover plate 78 can be lifted by means of handles 85.

As Figure 5 illustrates, each cylinder 70 has two pressure gas connections 84 such that a connection to a pressure gas source can be established using control device 4 (Figure 1) in order to bring the shut-off member 68 into the open or closed position. The pneumatic cylinder 70 is held in place by a plate 86 mounted on the cover plate 78 (Figure 5) and by an additional plate 90 that is fixed by screws 88 onto the fixed plate 86.

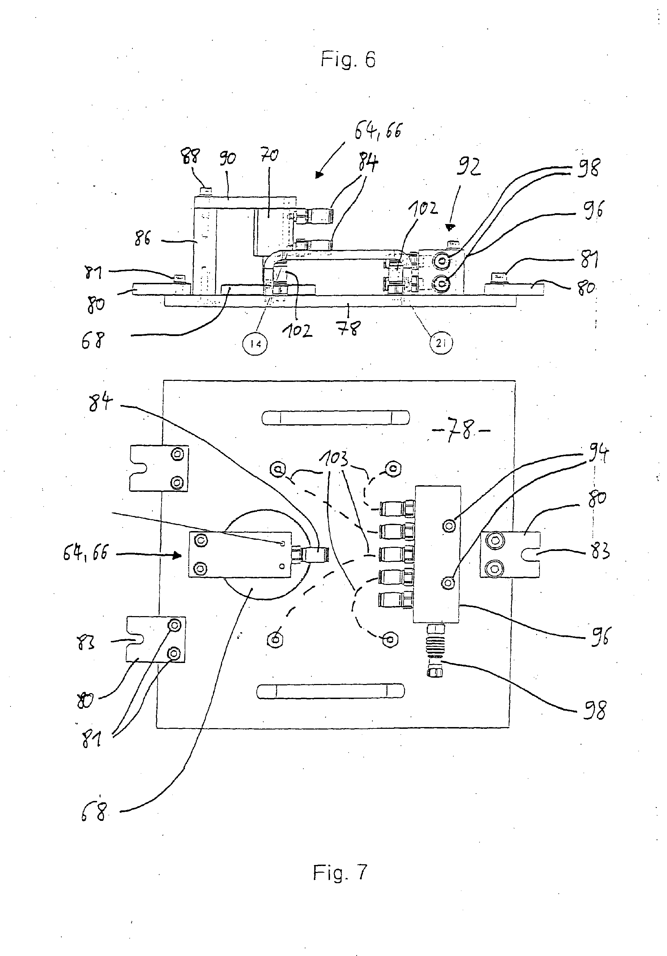

As best shown by Figures 5 - 7, a second gas conveying means 92 for generating a gas stream through the filter element 26 into the crude gas chamber 20 is provided in order to generate a stream through the filter element 26 into the crude gas chamber 20 when the shut-off device 64 (Figure 2, right-hand portion) is closed, so that the filter elements 26, 28 are cleaned at the same time as the vibration means 42, 44 is switched on. The second gas conveying means 92 comprises a pressure gas distributor attached to the covered plate 78 and in the form of a manifold block 96, said manifold block having two pressure gas connections 98 for feeding pressure gas and for establishing a connection to a pressure gas source not shown in the Figures. In addition, a plurality of outlet connections 100 are mounted on the manifold block 96, said connections being connectable to a plurality of connections 102 by means of tubes indicated by the broken lines 103. Connections 102 are connected to the flow channels provided in the cover plate 78, schematically shown in Figure 2 by the reference numeral 104, through which pressure gas can be fed into the filter elements 26, 28.

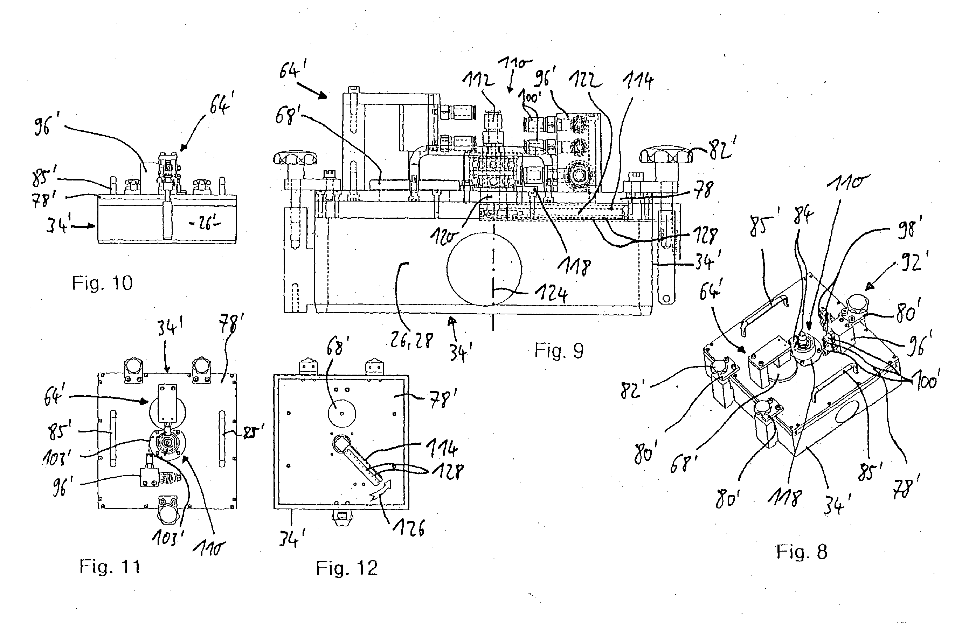

An alternative embodiment of a filter system shall now be described in more detail with reference to Figures 8 - 16. The filter system portion shown in Figures 8 - 16 is for using in a powder coating apparatus 1 pursuant to Figures 1 and 2 described in the foregoing; reference is made in that regard to the entire descriptions provided above, using the same numerals and describing in the following the main differences in the alternative embodiment.

As Figures 8 - 10 illustrate, a parallelepipedal frame for receiving a filter element 26, 28, as shown in Figure 2, is disposed between the crude gas chamber 20 and the clean gas chamber 30 (Figure 2). Preferably, two frames 34', 36 are arranged in parallel, as shown in Figure 2. A cover plate 78' covers the frame 34' and receives handles 85' and a plurality of fixing plates 80', with which the cover plate 78' can be detachably fastened to the frame 34' by means of a plurality of thumb screws 82'. The gas stream through the filter element 26 in the direction of the clean gas chamber 30 (Figure 2) can be interrupted or released by means of a shut-off device 64', in the manner described in the foregoing. By means of a manifold block 96', pressure gas can be fed from a pressure gas source, not shown, through two pressure gas connections 98' and dispensed through outlet connections 100', and conveyed further by means of tubes that are not shown in the Figures. Two tubes lead to zu pressure gas connections 84' of the shut-off device 64' for moving a circular shut-off member 68' up and down.

A second gas conveying means 92' serves to generate a gas stream through the filter element 26 inside frame 34' and substantially comprises the manifold block 96' and a nozzle facility 110 that has a movable nozzle element 114 for supplying one or several gas streams directed at the filter element. The nozzle element 114 is bolted onto the cover plate 78' by means of an annular flange 118 attachable to a housing 116. The nozzle element 114 has a connecting piece 112 that is connected, in a manner not shown, to an outlet connection 100' of the manifold block 96 so that pressure gas can be supplied. The connecting piece 112 leads into a gas channel 120 that runs into the middle of the housing 116 and communicates with a gas channel 122. Gas channel 122 is defined inside the movable nozzle element 114, which is configured as an elongated arm.

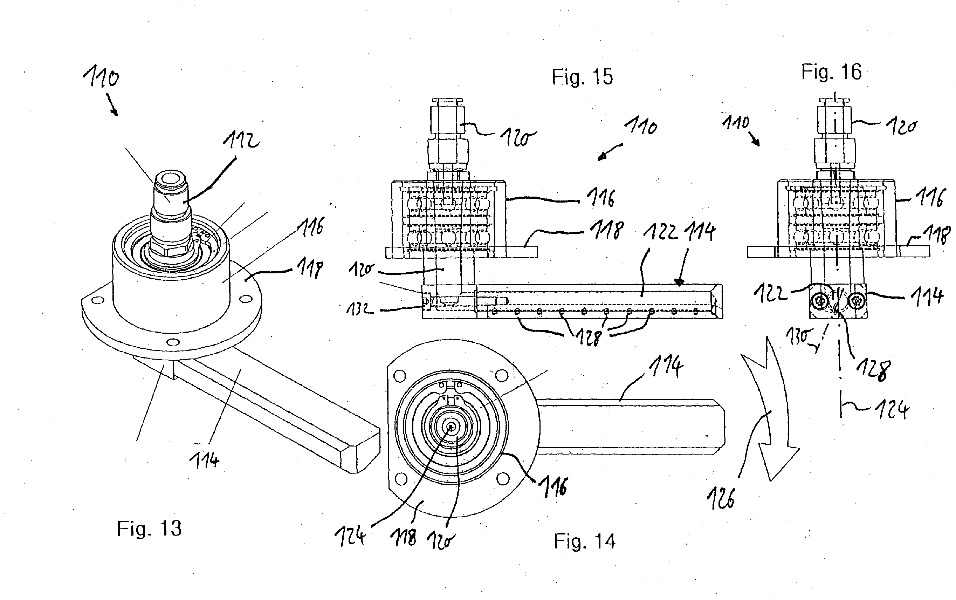

Nozzle element 114 is mounted rotatably about a rotational axis 124 (Figure 14) by means of a ball bearing inside the housing 116 or some other pivot bearing, so that rotation can occur in the direction shown by arrow 126 (Figures 12 and14). In this embodiment, pressure gas that flows through channel 120 and gas channel 122 and through several gas outlet channels 128 out of nozzle element 114 at relatively high speed is used to rotatably drive the rotatable nozzle element 114. The longitudinal axes 130 (Figure 16) of the cylindrical outlet channels 128 are slanted in relation to the rotational axis 124, in the embodiment at an angle of about 22°, or precisely 21.8°, so that a torque that causes the rotatable nozzle element 124 to rotate ensues as a result of the gas flowing out of the outlet channels 128. Alternatively, the angle can be in a range between 15° and 30°.

The nozzle element 114 in the form of an elongated arm is disposed under the cover plate 78' immediately adjacent and above the filter element 26 in such a way that the escaping gas streams flow directly onto the filter element 26, penetrating the latter and flowing at least partly in the direction of the crude gas chamber 20 (Figure 2). Rotational speeds of up to around 60 to 80 revolutions per minute can be reached, as well as higher or lower speeds. For example, the gas can be fed into the nozzle facility 114 at a pressure of 6 bar, and the cleaning time can be set to only six seconds, meaning that the pressure gas is supplied for a duration of six seconds. Figure 12 shows, in a view from below, the rotatable nozzle element 114 and the cover plate 78' of the filter element 26, viewed from below.

As Figures 10 to 12 show well, the nozzle facility 110 is attached centrally to the cover plate 78', and the shut-off device 64' is positioned off-center adjacent the nozzle facility 110. In Figure 11, tubes 103' are indicated, through which pressure gas can be conveyed from the manifold block 96' to the shut-off device 64' and the nozzle facility 110.

The nozzle element 114 is designed with a substantially square cross-section and is made of a flat material such as flat rolled steel. Gas channel 122 is bored through the center of said flat material. As is shown well in Figures 13 and 14, the edges of the arm are bezeled, for examply by milling, so that they acquire a favorable aerodynamic profile. Alternatively, the corners of the arm can also be rounded. In a manner not shown in the Figures, the leading edge of the arm could also be designed so that it tapers to a point, in order to keep the flow resistance as low as possible. A screw plug 132 is used to seal the end of the gas channel 122.

The manner in which the filter system, powder coating apparatus and method according to the invention operate is as follows.

As can be seen from Figure 1, powder is conveyed from the floor area of the crude gas chamber 20 through line 19 to spray gun 14, and fed into coating chamber 8 and sprayed there in order to spray and coat an object such as a cable. Surplus powder in the powder coating apparatus 8 is conveyed through line 18 into the crude gas chamber 20 by underpressure generated by the side-channel compressor 22 (Figure 2). When shut-off device 66 (left-hand portion in Figure 2) is open, powder particles are retained in normal operation by the two parallel filter elements 26, 28 while clean gas is released to the surrounding area through the clean gas chamber 30 and line 24.

After a certain operating period, one of the two shut-off devices 64 is brought into the closed position (right-hand portion in Figure 2), while gas continues to flow through the adjacent filter element 28 (left-hand portion). The second gas conveying means 92 is then activated such that pressure gas flows via the pressure gas distributor 96 from connections 100 through lines 103 to connections 102 and then via the flow channels 104 (Figure 2) through the filter element (26) into the crude gas chamber 20. The vibration means 42 is switched on simultaneously by means of the control device 4 (Figure 1), so that the frame 34 and the filter element 26 therein is knocked and/or vibrated, with the result that powder particles are detached from the filter element and conveyed into the crude gas chamber 20 by gravitation and by the flow generated by the second gas conveying means 92, until the filter element 26 is largely cleaned of powder particles. The shut-off device 64 is then returned to the open position, the vibration means 42 is switched off and the pressure gas supply to the second gas conveying means 92 is interrupted, so that a gas stream can again flow from the crude gas chamber 20 through the filter element 26 into the clean gas chamber 30.

If the left-hand filter element 28 in Figure 2 needs to be cleaned, the procedure is the same as just described, while filter element 26 continues to be used for cleaning and for generating underpressure by gas being drawn from the side-channel compressor 22. While this is happening, filter element 28 is extensively cleaned of filter particles in the same manner as described in the foregoing. In this way, both of the parallel filter elements can be operated simultaneously and alternately cleaned in the manner described whenever this is necessary after a certain operating time. In this way, the filter system 16 and the coating apparatus 1 are able to operate continuously.

The method for cleaning a filter or for operating a filter system pursuant to the embodiment shown in Figures 9 to 16 is basically similar to the embodiment described above with reference to Figures 1 and 2. It shall now be described in more detail.

In order to clean a filter element 34', two of which may be disposed beside each other as shown in Figure 2, the shut-off device 64' is brought into the closed position so that the gas stream through the filter from the crude gas chamber 20 into the clean gas chamber 30 is interrupted. By means of a control device, gas is then fed from the manifold block 96' through line 103' (Figure 11) into connector 112 and through channel 120 into the gas channel 122. The gas exits at high speed from the slanted outlet channels 128 (Figure 16) and owing to the resultant impulse exerts a torque on the rotatable nozzle element 114, mounted on bearings, such that said element is caused to rotate, with several gas streams flowing onto and through the filter element 26, so that powder particles in the filter element 26 are detached and carried along by a gas stream in the direction of the crude gas chamber 20 (Figure 2), with the result that the filter element 26 is cleaned. Due to the intensive gas stream, the gas feed through nozzle element 114 may be interrupted again after only a short period, for example after 5 - 20 seconds.

A vibration means (42, 44), previously described with reference to Figures 2 - 7, may, if necessary, be switched on while the nozzle element 114 is rotating in order to vibrate and/or shake the filter element 26; said vibration means may also form part of the filter system embodiment shown in Figures 8 - 16. The vibration means 42 may also be omitted, or does not necessarily have to be switched on in order to clean the filter element 26. In order for cleaning to be particularly efficient, however, the second gas conveying means 64' may, of course, be activated in conjunction with a vibration means 42, 44 for vibrating and/or shaking the filter element 26.

Owing to the parallel arrangement of two filter elements 26, 28 as previously described with reference to Figure 2, and respectively positioned nozzle elements 114 between the crude gas chamber 20 and the clean gas chamber 30, a situation can be advantageously achieved in which actual operation and the flow of gas from the crude gas chamber 20 in the direction of the clean gas chamber 30 remains unimpaired because only one of the filter elements 26 is cleaned at any one time in the manner described above.

## Claims

1. Filter system for cleaning a gas laden with powder particles, in particular for a powder coating apparatus, comprising at least one filter element arranged between a crude gas chamber and a clean gas chamber, and a first gas conveying means (92) for generating a gas stream from the crude gas chamber through the fitter element (26, 28) into the clean gas chamber,
**characterized by**
a shut-off device (64, 66) for interrupting the gas stream through the filter element (26, 28),
a second gas conveying means (96) for generating a gas stream through the filter element (26, 28) into the crude gas chamber (20),
and by a vibration means (42, 44) for vibrating and/or shaking the filter element (26, 28).

2. Filter system for cleaning a gas loaded with powder particles, in particular for a powder coating apparatus, comprising at least one filter element arranged between a crude gas chamber and a clean gas chamber, and a first gas conveying means for generating a gas stream from the crude gas chamber through the filter element (26, 28) into the clean gas chamber,
**characterized by** a second gas conveying means (92') for generating a gas stream through the filter element (26, 28), wherein the second gas conveying means has at least one movable nozzle element (114) for supplying at least one gas stream directed at the filter element (26, 28).

3. Filter system according to claim 1 and/or claim 2,
**characterized in that** two filter elements (26, 28) are arranged in parallel between the crude gas chamber (20) and the clean gas chamber (30), and each filter element (26, 28) is assigned a shut-off device (64, 66) for interrupting the gas stream, as well as a vibration means (44, 46).

4. Filter system according to claim 1, 2 or 3,
**characterized in that** the filter element (26, 28) is disposed inside a frame (34, 36) and that the vibration means (42, 44) are associated with said frame (34, 36) such that the frame (34, 36) and the filter element (26, 28) disposed inside said frame (34, 36) are caused to vibrate.

5. Filter system according to claim 4,
**characterized in that** the vibration means (42, 44) comprises a pneumatic cylinder (46, 48) that can be intermittently charged with pressure gas, the piston (50, 52) movable within said cylinder being connected by a piston rod (54, 56) to the frame (34, 36).

6. Filter system according to claim 5,
**characterized in that** a plate which can be brought into contact with the frame (34, 36) is attached to a free end of the piston rod (54, 56).

7. Filter system according to one of claims 4 to 6,
**characterized in that** the frame (34, 36) for receiving the filter element is disposed at a distance plate (40) positioned between the crude gas chamber and the clean gas chamber, and that the vibration means (44, 46) is mounted on said distance plate (40).

8. Filter system according to at least one of the above claims,
**characterized in that** a cover plate (78) covering the frame (36, 38) is separably attachable to the frame (36, 38), that an outlet opening (76) is formed in the cover plate (78) for discharging cleaned gas into the clean gas chamber (30), and that the shut-off device (64, 66) comprises a movable shut-off member (68) for closing the outlet opening (76).

9. Filter system according to claim 8,
**characterized in that** the shut-off device comprises a pneumatic cylinder (70) that can be charged with pressure gas, wherein the shut-off member of the shut-off device is connected by means of a piston rod (54, 56) to a piston (50, 52) that is movable inside the pneumatic cylinder.

10. Filter system according to at least of claims 2 to 9,
**characterized in that** the movable nozzle element (114) is rotatably mounted and is capable of being driven.

11. Filter system according to claim 10,
**characterized in that** the nozzle element (114) has at least one elongated arm with a gas channel (122) defined therein and a plurality of gas outlet channels (128) directed at the filter element.

12. Filter system according to claim 11,
**characterized in that** the gas outlet channels (128) are so arranged that the movable arm can be rotably driven by the outflowing gas.

13. Filter system according to claim 12,
**characterized in that** the longitudinal axes (130) of the gas outlet channels (128) are positioned spaced apart on the arm and slanted with respect to a rotational axis, preferably at an angle of 15°-30°, and particularly preferably at an angle of about 22°.

14. Filter system according to one of the above claims 2 to 13,
**characterized in that** the element (114) is rotatably mounted on the cover plate (78) in such a way that the nozzle element (114) is positioned directly adjacent the filter element (26, 28).

15. Filter system according to at least one of the above claims,
**characterized in that** the second gas conveying means (92) has several flow channels (104) for feeding pressure gas into the filter elements (26, 28) and that the inlet openings can be connected to a pressure gas source by means of a pressure gas distributor mounted on the cover plate (78).

16. Method for filter cleaning a gas laden with powder particles,
by which the gas laden with powder particles is conveyed by a gas conveying means (22) from a crude gas chamber through at least one filter element into a clean gas chamber,
**characterized in that**, to clean the filter element (26, 28), a gas stream through the filter element (26, 28) in the direction of the clean gas chamber (20) is generated by a second gas conveying means (92'), wherein the gas stream is supplied in the direction of the filter element (26, 28) by a movable nozzle element (114).

17. Method for filter cleaning a gas laden with powder particles,
by which the gas laden with powder particles is conveyed by a gas conveying means (92) from a crude gas chamber through at least one filter element into a clean gas chamber,
**characterized in that**, to clean the filter element, a gas stream through the filter element (26, 28) in the direction of the clean gas chamber is generated by a second gas conveying means (92), and that the filter element (26, 28) is vibrated and/or shaken by a vibration means (44, 46) such that powder particles present in the filter element (26, 28) are detached from the filter element (26, 28).

18. Method for filter cleaning a gas laden with powder particles,
by which the gas laden with powder particles is conveyed from a crude gas chamber through at least one filter element (26, 28) into a clean gas chamber by a gas conveying means (92),
**characterized in that** two filter elements are arranged in parallel between the crude gas chamber and the clean gas chamber, and that, in order to clean one of the filter elements, the gas stream into the clean gas chamber is firstly interrupted by means of a shut-off device assigned to the filter element (26, 28), while a gas stream continues to flow through the respective other filter element (26, 28) in order to clean the gas,
that a cleaning gas stream through the filter element (26, 28) in the direction of the clean gas chamber is generated in the first filter element (26, 28) by a second gas conveying means (92),
and that, while the cleaning gas stream is flowing through the filter element (26, 28), the first filter element (26, 28) is vibrated and/or shaken by a vibration means (44, 46) such that powder particles present in the filter element (26, 28) are detached from the filter element (26, 28),

19. Method according to claim 18,
**characterized in that** the cleaning gas stream is channeled into the filter elements by a plurality of flow channels (104) formed in the cover plate (78), and that the vibration means (44, 46) is automatically switched on by a control device when the cleaning gas stream is fed into the filter element and the shut-off device for interrupting the gas stream through the filter element (26, 28) is in the closed position.

20. Method according to claim 18 or 19,
**characterized in that** the first gas conveying means (92) is a side-channel compressor that extracts gas from the clean gas chamber.

21. Method according to claim 17, 18 or 19,
**characterized in that** the crude gas chamber is filled with powder particles and powder particles are conveyed in combination with gas from the crude gas chamber to a powder coating booth.

22. Method according to claim 15,
**characterized in that** the movable nozzle element (114) is configured as a rotatable arm with one gas channel (122) and a plurality of gas outlet channels (128) and is rotated by the gas streams flowing out of the gas outlet channels (128).

23. Powder coating apparatus for coating objects with powder,
comprising a coating room that the object to be coated can be transported into and out of,
a facility for supplying and feeding powder into the coating room,
a control device for controlling the components of the coating apparatus and
a filter system for cleaning and recovering powder particles,
**characterized in that** the filter system is designed in accordance with at least of the above claims.
